(19) **Europäisches Patentamt**
**European Patent Office**
**Office européen des brevets**

(11) **EP 4 755 663 A1**

(12) **EUROPEAN PATENT APPLICATION**

(43) Date of publication:
10.06.2026 Bulletin 2026/24

(51) International Patent Classification (IPC):
*B60C 23/04* (2006.01)    *B60C 23/06* (2006.01)

(21) Application number: 25213862.3

(52) Cooperative Patent Classification (CPC):
B60C 23/0416; B60C 23/061

(22) Date of filing: 06.11.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 06.12.2024 JP 2024213931

(71) Applicant: SUMITOMO RUBBER INDUSTRIES,
LTD.
Kobe-shi, Hyogo 651-0072 (JP)

(72) Inventors:
• TOSHIMA, Kota
Kobe-shi, 651-0072 (JP)
• TAKEMOTO, Masataka
Kobe-shi, 651-0072 (JP)

(74) Representative: TBK
Bavariaring 4-6
80336 München (DE)

(54) **TIRE POSITION ROTATION DETECTION DEVICE, METHOD, AND PROGRAM**

(57) Provided is a technique for detecting the rotation of attachment positions of tires in a vehicle. A tire position rotation detection device includes an acquisition unit, a first calculation unit, a second calculation unit, and a rotation determination unit. The acquisition unit acquires a rotational speed of each of tires while a vehicle is traveling. The first calculation unit calculates a first indicator. The second calculation unit calculates a second indicator. The rotation determination unit determines whether or not rotation of attachment positions of the tires has been performed before the vehicle starts traveling based on the first indicator and the second indicator. The rotation determination unit determines that the rotation of the tires has been performed before the vehicle starts traveling when a change in the first indicator from an initial value exceeds a predetermined first threshold value and a change in the second indicator from an initial value is equal to or below a predetermined second threshold value.

Fig. 2

EP 4 755 663 A1

**Description**

FIELD OF INVENTION

The present invention relates to a tire position rotation detection device, a tire position rotation detection method, and a tire position rotation detection program for detecting the rotation of attachment positions of tires in a vehicle.

BACKGROUND

Conventionally, a system for automatically detecting a reduction in pressure in a tire (tire pressure monitoring system; TPMS) has been studied. For example, there is a TPMS conforming to a dynamic loaded radius (DLR) method. In the DLR method, such a phenomenon that a tire that has been reduced in pressure collapses during traveling and is thus reduced in dynamic loaded radius and rotated at a higher speed is utilized, and a reduction in pressure in a tire is estimated from the rotational speed of the tire.

JP 2017-149340A discloses pressure reduction indicators DEL1 to DEL3 for estimating a reduction in pressure in accordance with the DLR method. In JP 2017-149340A, DEL1 to DEL3 are defined as described below. Note that V1 to V4 respectively represent the rotational speeds of tires on a front left wheel, a front right wheel, a rear left wheel, and a rear right wheel.

$$DEL1 = \{(V1 + V4) / (V2 + V3) - 1\} \times 100 \ (\%)$$

$$DEL2 = \{(V1 + V2) / (V3 + V4) - 1\} \times 100 \ (\%)$$

$$DEL3 = \{(V1 + V3) / (V2 + V4) - 1\} \times 100 \ (\%)$$

In a pressure reduction determination in which the pressure reduction indicators DEL1 to DEL3 as described above are combined with each other, reference values for the pressure reduction indicators DEL1 to DEL3 are stored beforehand in a vehicle. The reference values are values of the pressure reduction indicators DEL1 to DEL3 under the assumption that the tires on the front left wheel, the front right wheel, the rear left wheel, and the rear right wheel are all within a normal internal pressure range. When a difference between each of the current values of the pressure reduction indicators DEL1 to DEL3 and each of the reference values that have been stored is equal to or above a threshold value, it is estimated that at least one tire among the tires described above has been reduced in pressure. Here, as disclosed in JP 2017-149340A, after the air pressure in the tires has been adjusted, it is necessary to update the reference values stored in the vehicle to perform an accurate pressure reduction determination. The reference values are normally updated based on an initialization instruction provided by a user to the vehicle. JP 2017-149340A discloses a technique for issuing an initialization reminder warning when it is determined that the air pressure in the tires has been adjusted and when no initialization instruction provided by the user has been detected.

SUMMARY of INVENTION

In the technique disclosed in JP 2017-149340A, as a condition for issuing the initialization reminder warning, whether or not a reduction in pressure at a level for issuing a pressure reduction warning has occurred is first determined, and then, whether or not the air pressure in the tire has returned to a normal range (whether or not the air pressure has been adjusted) is determined. That is, in the technique disclosed in JP 2017-149340A, when the air pressure in the tire is outside a normal pressure range at a first timing, and then, the air pressure in the tire returns to the normal pressure range at a second timing, the initialization reminder warning may be outputted. Incidentally, since the reference values for the pressure reduction indicators DEL1 to DEL3 also change before and after the rotation of attachment positions of the tires, the reference values are also preferably updated to improve accuracy in detecting a reduction in pressure in such a case. However, in the technique disclosed in JP 2017-149340A, when no particular pressure reduction warning has been outputted at a timing before the rotation, it has been impossible to issue the initialization reminder warning.

An object of the present invention is to provide a technique for detecting the rotation of attachment positions of tires in a vehicle.

A tire position rotation detection device according to a first aspect of the present invention includes an acquisition unit, a first calculation unit, a second calculation unit, and a rotation determination unit. The acquisition unit is configured to acquire, while a vehicle having at least a front left position, a front right position, a rear left position, and a rear right position for attaching tires is traveling, a rotational speed of each of the tires respectively attached at the front left position, the front right position, the rear left position, and the rear right position. The first calculation unit is configured to calculate a first indicator for comparing the rotational speed of the tire attached at the front left position and the rotational speed of the tire attached at the rear right position with the rotational speed of the tire attached at the front right position and the rotational speed of the tire attached at the rear left position or a first indicator for comparing the rotational speed of the tire attached at the front left position and the rotational speed of the tire attached at the front right position with the rotational speed of the tire attached at the rear left position and the rotational speed of the tire attached at the rear right position. The second calculation unit is configured to calculate a second indicator for comparing the rotational speed of the tire attached at the front left position and the rotational speed of the tire attached at the rear left position with the rotational speed of the tire attached at the front right position and the rotational speed of the tire attached at the rear right position. The rotation determination unit is configured to determine whether or not rotation of attachment positions of the tires has been performed before the vehicle starts traveling based on the first indicator and the second indicator. The rotation determination unit determines that, when a change in the first indicator from an initial value exceeds a predetermined first threshold value and a change in the second indicator from an initial value is equal to or below a predetermined second threshold value, the rotation of the tires has been performed between the front left position and the rear left position before the vehicle starts traveling and the rotation of the tires has been performed between the front right position and the rear right position before the vehicle starts traveling.

A tire position rotation detection device according to a second aspect includes an acquisition unit, a first calculation unit, a second calculation unit, and a rotation determination unit. The acquisition unit is configured to acquire, while a vehicle having at least a front left position, a front right position, a rear left position, and a rear right position for attaching tires is traveling, a rotational speed of each of the tires respectively attached at the front left position, the front right position, the rear left position, and the rear right position. The first calculation unit is configured to calculate a first indicator for comparing the rotational speed of the tire attached at the front left position and the rotational speed of the tire attached at the rear left position with the rotational speed of the tire attached at the front right position and the rotational speed of the tire attached at the rear right position or a first indicator for comparing the rotational speed of the tire attached at the front left position and the rotational speed of the tire attached at the front right position with the rotational speed of the tire attached at the rear left position and the rotational speed of the tire attached at the rear right position. The second calculation unit is configured to calculate a second indicator for comparing the rotational speed of the tire attached at the front left position and the rotational speed of the tire attached at the rear right position with the rotational speed of the tire attached at the front right position and the rotational speed of the tire attached at the rear left position. The rotation determination unit is configured to determine whether or not rotation of attachment positions of the tires has been performed before the vehicle starts traveling based on the first indicator and the second indicator. The rotation determination unit determines that, when a change in the first indicator from an initial value exceeds a predetermined first threshold value and a change in the second indicator from an initial value is equal to or below a predetermined second threshold value, the rotation of the tires has been performed between the front left position and the rear right position before the vehicle starts traveling and the rotation of the tires has been performed between the front right position and the rear left position before the vehicle starts traveling.

A tire position rotation detection device according to a third aspect is the tire position rotation detection device according to the first aspect or the second aspect, and further includes an identification unit that is configured to identify, based on a rotational speed signal representing the rotational speed of each of the tires, a first torsional resonance frequency of the tire attached at the front left position and a second torsional resonance frequency of the tire attached at the front right position or identify, based on the rotational speed of each of the tires, a first torsional resonance frequency of the tire attached at the rear left position and a second torsional resonance frequency of the tire attached at the rear right position. The rotation determination unit determines that, when the change in the first indicator from the initial value exceeds the predetermined first threshold value, the change in the second indicator from the initial value is equal to or below the predetermined second threshold value, a change in the first torsional resonance frequency from an initial value is equal to or below a predetermined third threshold value, and a change in the second torsional resonance frequency from an initial value is equal to or below a predetermined fourth threshold value, the rotation of the tires has been performed before the vehicle starts traveling.

A tire position rotation detection device according to a fourth aspect is the tire position rotation detection device according to any of the first aspect to the third aspect, and further includes a notification unit that is configured to issue, when it is determined that the rotation of the tires has been performed before the vehicle starts traveling, a notification urging a user of the vehicle to perform an initialization operation.

A tire position rotation detection method according to a fifth aspect is a tire position rotation detection method executed by one computer or a plurality of computers, and includes those described below:

- acquiring, while a vehicle having at least a front left position, a front right position, a rear left position, and a rear right position for attaching tires is traveling, a rotational speed of each of the tires respectively attached at the front left position, the front right position, the rear left position, and the rear right position;
- calculating a first indicator for comparing the rotational speed of the tire attached at the front left position and the rotational speed of the tire attached at the rear right position with the rotational speed of the tire attached at the front right position and the rotational speed of the tire attached at the rear left position or a first indicator for comparing the rotational speed of the tire attached at the front left position and the rotational speed of the tire attached at the front right position with the rotational speed of the tire attached at the rear left position and the rotational speed of the tire attached at the rear right position;

- calculating a second indicator for comparing the rotational speed of the tire attached at the front left position and the rotational speed of the tire attached at the rear left position with the rotational speed of the tire attached at the front right position and the rotational speed of the tire attached at the rear right position; and

- determining whether or not rotation of attachment positions of the tires has been performed before the vehicle starts traveling based on the first indicator and the second indicator.

The determining is determining that, when a change in the first indicator from an initial value exceeds a predetermined first threshold value and a change in the second indicator from an initial value is equal to or below a predetermined second threshold value, the rotation of the tires has been performed between the front left position and the rear left position before the vehicle starts traveling and the rotation of the tires has been performed between the front right position and the rear right position before the vehicle starts traveling.

A tire position rotation detection method according to a sixth aspect is a tire position rotation detection method executed by one computer or a plurality of computers, and includes those described below:

- acquiring, while a vehicle having at least a front left position, a front right position, a rear left position, and a rear right position for attaching tires is traveling, a rotational speed of each of the tires respectively attached at the front left position, the front right position, the rear left position, and the rear right position;

- calculating a first indicator for comparing the rotational speed of the tire attached at the front left position and the rotational speed of the tire attached at the rear left position with the rotational speed of the tire attached at the front right position and the rotational speed of the tire attached at the rear right position or a first indicator for comparing the rotational speed of the tire attached at the front left position and the rotational speed of the tire attached at the front right position with the rotational speed of the tire attached at the rear left position and the rotational speed of the tire attached at the rear right position;

- calculating a second indicator for comparing the rotational speed of the tire attached at the front left position and the rotational speed of the tire attached at the rear right position with the rotational speed of the tire attached at the front right position and the rotational speed of the tire attached at the rear left position; and

- determining whether or not rotation of attachment positions of the tires has been performed before the vehicle starts traveling based on the first indicator and the second indicator.

The determining is determining that, when a change in the first indicator from an initial value exceeds a predetermined first threshold value and a change in the second indicator from an initial value is equal to or below a predetermined second threshold value, the rotation of the tires has been performed between the front left position and the rear right position before the vehicle starts traveling and the rotation of the tires has been performed between the front right position and the rear left position before the vehicle starts traveling.

A tire position rotation detection program according to a seventh aspect causes one computer or a plurality of computers to execute those described below:

- acquiring, while a vehicle having at least a front left position, a front right position, a rear left position, and a rear right position for attaching tires is traveling, a rotational speed of each of the tires respectively attached at the front left position, the front right position, the rear left position, and the rear right position;

- calculating a first indicator for comparing the rotational speed of the tire attached at the front left position and the rotational speed of the tire attached at the rear right position with the rotational speed of the tire attached at the front right position and the rotational speed of the tire attached at the rear left position or a first indicator for comparing the rotational speed of the tire attached at the front left position and the rotational speed of the tire attached at the front right position with the rotational speed of the tire attached at the rear left position and the rotational speed of the tire attached at the rear right position;

- calculating a second indicator for comparing the rotational speed of the tire attached at the front left position and the rotational speed of the tire attached at the rear left position with the rotational speed of the tire attached at the front right position and the rotational speed of the tire attached at the rear right position; and

- determining whether or not rotation of attachment positions of the tires has been performed before the vehicle starts traveling based on the first indicator and the second indicator.

The determining is determining that, when a change in the first indicator from an initial value exceeds a predetermined first threshold value and a change in the second indicator from an initial value is equal to or below a predetermined second threshold value, the rotation of the tires has been performed between the front left position and the rear left position before the vehicle starts traveling and the rotation of the tires has been performed between the front right position and the rear right position before the vehicle starts traveling.

A tire position rotation detection program according to an eighth aspect causes one computer or a plurality of computers to execute those described below:

- acquiring, while a vehicle having at least a front left position, a front right position, a rear left position, and a rear right position for attaching tires is traveling, a rotational speed of each of the tires respectively attached at the front left position, the front right position, the rear left position, and the rear right position;
- calculating a first indicator for comparing the rotational speed of the tire attached at the front left position and the rotational speed of the tire attached at the rear left position with the rotational speed of the tire attached at the front right position and the rotational speed of the tire attached at the rear right position or a first indicator for comparing the rotational speed of the tire attached at the front left position and the rotational speed of the tire attached at the front right position with the rotational speed of the tire attached at the rear left position and the rotational speed of the tire attached at the rear right position;
- calculating a second indicator for comparing the rotational speed of the tire attached at the front left position and the rotational speed of the tire attached at the rear right position with the rotational speed of the tire attached at the front right position and the rotational speed of the tire attached at the rear left position; and
- determining whether or not rotation of the attachment positions of the tires has been performed before the vehicle starts traveling based on the first indicator and the second indicator.

The determining is determining that, when a change in the first indicator from an initial value exceeds a predetermined first threshold value and a change in the second indicator from an initial value is equal to or below a predetermined second threshold value, the rotation of the tires has been performed between the front left position and the rear right position before the vehicle starts traveling and the rotation of the tires has been performed between the front right position and the rear left position before the vehicle starts traveling.

According to the present invention, a technique for detecting the rotation of attachment positions of tires in a vehicle is provided.

BRIEF DESCRIPTION OF DRAWINGS

FIG. 1 is a schematic diagram illustrating a situation in which a tire position rotation detection device according to an embodiment of the present invention is mounted on a vehicle.
FIG. 2 is a block diagram illustrating an electric configuration of the detection device.
FIG. 3A is a flowchart illustrating a flow of tire position rotation detection processing.
FIG. 3B is a continuation of FIG. 3A.
FIG. 4 is a diagram illustrating an example of a tire position rotation method.
FIG. 5 is a diagram illustrating an example of the tire position rotation method.

DETAILED DESCRIPTION OF THE PREFERRED EMBODIMENTS

A tire position rotation detection device, a tire position rotation detection method, and a tire position rotation detection program according to an embodiment of the present invention will be described below with reference to the drawings.

<1. Overall Configuration>

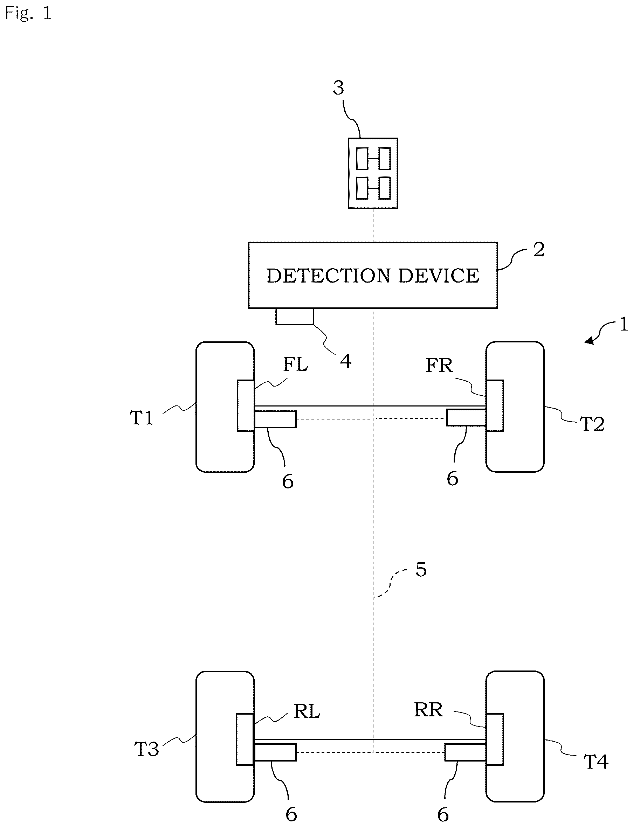

FIG. 1 is a schematic diagram illustrating a situation in which a tire position rotation detection device 2 according to the present embodiment (hereinafter also simply referred to as the "detection device 2") is mounted on a vehicle 1. The vehicle 1 is an automobile that may include, as a prime mover, an internal combustion engine, an electric motor, or both an internal combustion engine and an electric motor. The vehicle 1 according to the present embodiment is a front-engine front-drive four-wheel vehicle, and has a front left position FL, a front right position FR, a rear left position RL, and a rear right position RR. The front left position FL and the front right position FR are positioned at both end portions of a front axle, and the rear left position RL and the rear right position RR are positioned at both end portions of a rear axle. The vehicle 1 includes a mechanism (for example, wheel hubs) for attaching tires T1 to T4 attached to rim wheels (hereinafter also referred to as "tire and wheel assemblies T1 to T4") respectively at the front left position FL, the front right position FR, the rear left position RL, and the rear right position RR. Although the tire and wheel assemblies T1 to T4 are respectively attached at the front left position FL, the front right position FR, the rear left position RL, and the rear right position RR in FIG. 1, the rotation of their attachment positions in the vehicle 1 may be performed among one another for reasons of suppressing uneven wear on the tires, for example.

The detection device 2 can detect the rotation of the attachment positions of the tire and wheel assemblies T1 to T4 in the vehicle 1. Upon detection of the rotation of the attachment positions, the detection device 2 issues, via a display 3 mounted on the vehicle 1, a notification urging a user (typically, a driver) of the vehicle 1 to perform an initialization operation. The initialization operation refers to a user operation necessary for more accurately performing detection of a reduction in pressure in the tire and wheel assemblies T1 to T4 in a TPMS conforming to a DLR method mounted on the vehicle 1. When the user operates an operation unit 4 described later in the vehicle 1 to perform an initialization operation, the detection device 2 receives the initialization operation as an initialization instruction provided by the user. Upon reception of the initialization instruction, the detection device 2 transmits an initialization signal to an in-vehicle electronic control unit (ECU) constituting the TPMS. The initialization signal refers to a signal requesting initialization of reference values used in reduced pressure detection processing that the in-vehicle ECU performs. The tire position rotation detection processing and the initialization processing as mentioned above will be described later in detail.

In the vehicle 1, wheel speed sensors 6 are attached respectively corresponding to the front left position FL, the front right position FR, the rear left position RL, and the rear right position RR. The wheel speed sensors 6 respectively detect the rotational speeds of the tire and wheel assemblies T1 to T4 that are attached at the attachment positions corresponding to the respective wheel speed sensors 6, and output rotational speed signals representing the rotational speeds. The wheel speed sensors 6 are data-communicably connected to the detection device 2 via a communication line 5 or wirelessly. The rotational speed signals that the wheel speed sensors 6 have outputted are sequentially transmitted to the detection device 2 together with information for identifying the wheel speed sensors 6.

It is possible to use, as the wheel speed sensors 6, any sensor that can detect the rotational speeds of the tire and wheel assemblies T1 to T4. For example, it is also possible to use a sensor of a type that measures a rotational speed from a signal that an electromagnetic pick-up outputs, or it is also possible to use a sensor of a type that utilizes rotation to generate electric power like a dynamo and measures a rotational speed from a voltage at this time. Specific positions for attaching the wheel speed sensors 6 are also not particularly limited, and it is possible to appropriately select positions in accordance with the type of sensor as long as it is possible to detect rotational speeds.

The display 3 is not particularly limited as long as it is possible to display various kinds of notifications to the user, and, for example, can be achieved in a desired aspect such as a liquid crystal display element, a liquid crystal monitor, and an organic electroluminescence (EL) display. When the display 3 is configured as a touch panel display, the display 3 may also serve as the operation unit 4 described later. It is also possible to appropriately select the installation position of the display 3, but the display 3 is preferably provided at a position that is easily understandable to the user, such as a position on an instrument panel. When the detection device 2 is connected to a car navigation system, a monitor for car navigation can be used as the display 3. When the monitor is used as the display 3, various kinds of notifications can be icons and character information displayed on the monitor.

The operation unit 4 is a mechanism that allows the user to provide an initialization instruction for the detection device 2 by operating it. The operation unit 4 is not particularly limited as long as the user can operate it, and, for example, can be achieved in a desired aspect such as a push button, a switch-type lever, a rotary dial, and a touch panel display. It is also possible to appropriately select the installation position of the operation unit 4, but the operation unit 4 is preferably provided at a position that is easily understandable to the user, such as a position on an instrument panel. In addition, the operation unit 4 may include a light-emitting element and the like, such as a light-emitting diode (LED), and the light-emitting element and the like may be configured to come on when it is necessary to urge the user to pay attention and go off upon completion of an initialization operation by the user.


<2. Detection Device>

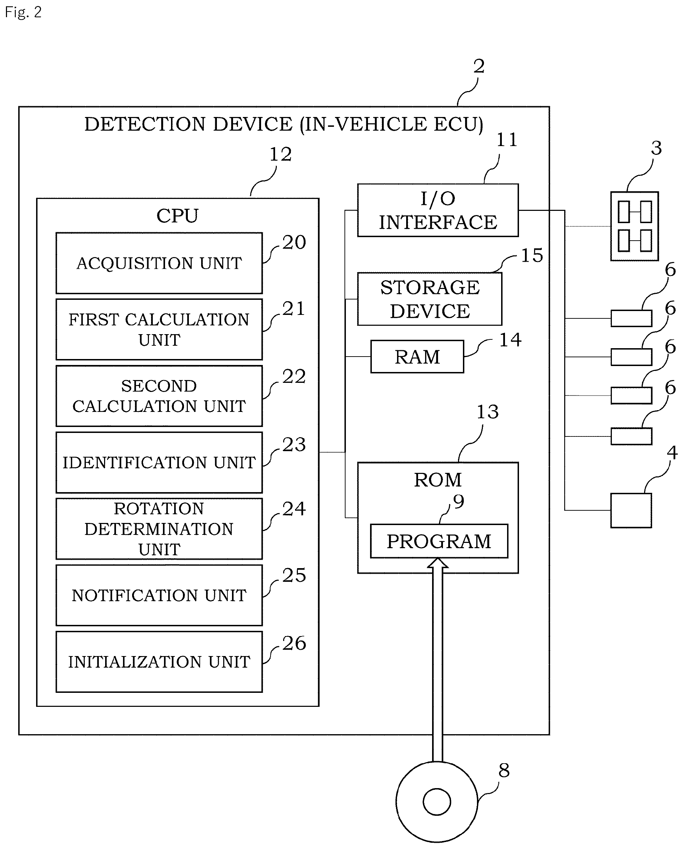

FIG. 2 is a block diagram illustrating an electric configuration of the detection device 2. The detection device 2 is, as hardware, an in-vehicle ECU mounted on the vehicle 1, and includes, as illustrated in FIG. 2, an I/O interface 11, a central processing unit (CPU) 12, a read only memory (ROM) 13, a random access memory (RAM) 14, and a non-volatile rewritable storage device 15. These elements are electrically connected to one another. The I/O interface 11 is a communication device that achieves communication with the display 3, the operation unit 4, the wheel speed sensors 6, and an external device including another ECU. In the ROM 13, a program 9 for controlling the operation of each component in the vehicle 1 is stored. The program 9 is written in the ROM 13 via a storage medium 8, such as a CD-ROM, or via a programmer device, such as a chip programmer. The CPU 12 reads, from the ROM 13, and executes the program 9 to virtually operate as an acquisition unit 20, a first calculation unit 21, a second calculation unit 22, an identification unit 23, a rotation determination unit 24, a notification unit 25, and an initialization unit 26. The operation of respective components 20 to 26 will be described later in detail. The storage device 15 includes a hard disk, a flash memory, or an erasable programmable read only memory (EPROM), for example, and mainly constitutes a storage region of the detection device 2. Note that a storage location of the program 9 may be the storage device 15, instead of the ROM 13. The RAM 14 and the storage device 15 are appropriately used for computation by the CPU 12.

Note that the detection device 2 is an in-vehicle ECU constituting the TPMS, and may be integrally configured with an in-vehicle ECU that performs the reduced pressure detection processing for the tire and wheel assemblies T1 to T4, or may be configured as an in-vehicle ECU other than the in-vehicle ECU.

<3. Tire Position Rotation Detection Processing>

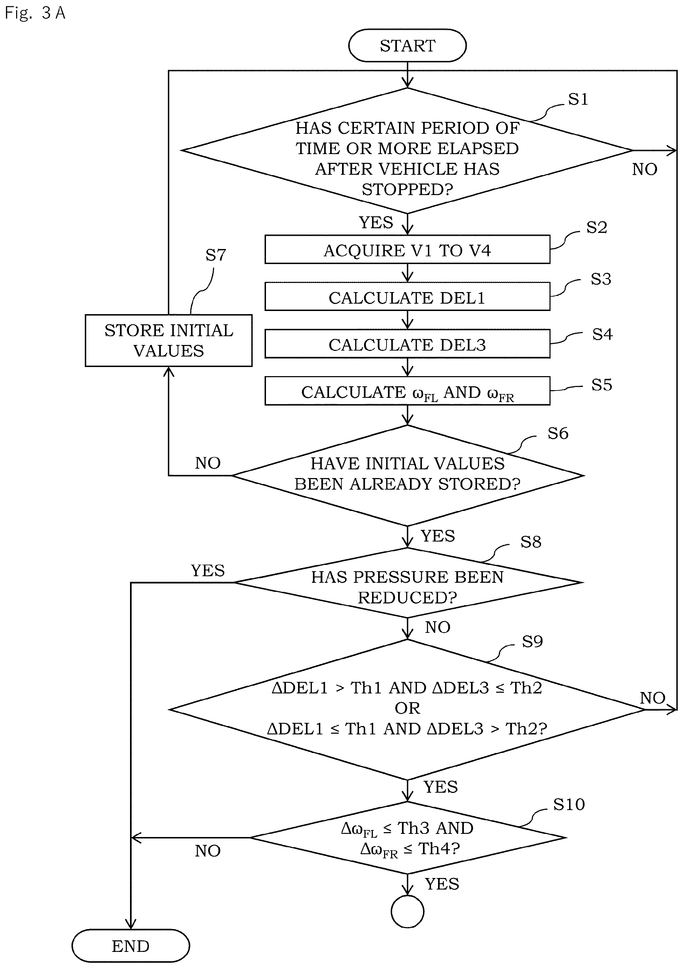

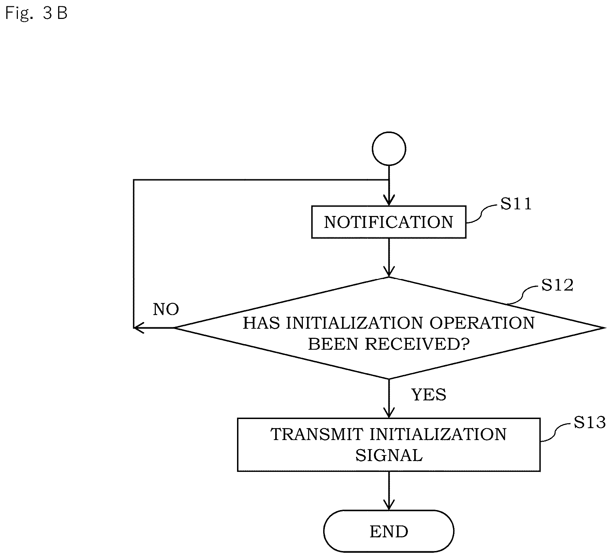

An example of the tire position rotation detection processing and the initialization processing that the detection device 2 executes will be described below with reference to FIGS. 3A and 3B. The flowchart illustrated in FIGS. 3A and 3B starts, for example, when a switch for an electric system in the vehicle 1 is turned on, is performed once or repeated a plurality of times, and ends when a certain period of time or more elapses after the vehicle 1 stops.

At step S1, the acquisition unit 20 determines whether or not a certain period of time or more has elapsed at present after the vehicle 1 has stopped. As a precondition, the rotation of the attachment positions of the tire and wheel assemblies T1 to T4 is performed during a stop of the vehicle 1 when its prime mover has stopped continuously for a certain period of time or more. The determination at step S1 is a determination of whether or not the precondition described above has been satisfied. The acquisition unit 20, for example, communicates with a control unit that controls the prime mover of the vehicle 1, and acquires a period of time during which the prime mover has continuously been in an off state to make it possible to perform the determination at step S1. When it is determined at step S1 that "a certain period of time or more has elapsed after the vehicle 1 has stopped (YES)", step S2 is then executed. Until it is determined at step S1 that "a certain period of time or more has elapsed after the vehicle 1 has stopped (YES)", step S2 is not executed.

At step S2, the acquisition unit 20 acquires time-series rotational speed signals from the respective wheel speed sensors 6 attached respectively corresponding to the front left position FL, the front right position FR, the rear left position RL, and the rear right position RR. The acquisition unit 20 converts the acquired rotational speed signals into rotational speeds V1 to V4 of the tire and wheel assemblies T1 to T4, and stores them in the RAM 14 or the storage device 15. In the present embodiment, the rotational speeds of the tire and wheel assemblies T1 to T4 attached at the front left position FL, the front right position FR, the rear left position RL, and the rear right position RR are respectively differentiated and referred to as rotational speeds $V_{FL}$, $V_{FR}$, $V_{RL}$, and $V_{RR}$. When the tire and wheel assemblies T1 to T4 are attached to the vehicle 1 as illustrated in FIG. 1, V1 coincides with $V_{FL}$, V2 coincides with $V_{FR}$, V3 coincides with $V_{RL}$, and V4 coincides with $V_{RR}$. Here, on the rotational speeds V1 and V2 of the tire and wheel assemblies T1 and T2, correction processing in which a slip due to being drive wheels is taken into consideration may be appropriately performed.

At step S3, the first calculation unit 21 calculates a first indicator DEL1 based on the rotational speeds V1 to V4. In the present embodiment, DEL1 is defined as Expression (1) described below, and V1, V2, V3, and V4 at the identical time are respectively assigned to $V_{FL}$, $V_{FR}$, $V_{RL}$, and $V_{RR}$ in Expression (1). As can be seen from Expression (1), DEL1 is an indicator for comparing the rotational speed $V_{FL}$ and the rotational speed $V_{RR}$ with the rotational speed $V_{FR}$ and the rotational speed $V_{RL}$. Note that, in the DLR method, DEL1 is also a pressure reduction indicator for detecting a reduction in pressure in a tire and wheel assembly. Expression 1

$$DEL1 = \left(\frac{V_{FL} + V_{RR}}{V_{FR} + V_{RL}} - 1\right) * 100 \tag{1}$$

At step S4, the second calculation unit 22 calculates a second indicator DEL3 based on the rotational speeds V1 to V4. In the present embodiment, DEL3 is defined as Expression (2) described below, and V1, V2, V3, and V4 at the identical time are respectively assigned to $V_{FL}$, $V_{FR}$, $V_{RL}$, and $V_{RR}$ in Expression (2). As can be seen from Expression (2), DEL3 is an indicator for comparing the rotational speed $V_{FL}$ and the rotational speed $V_{RL}$ with the rotational speed $V_{FR}$ and the rotational speed $V_{RR}$. Note that, as with DEL1, in the DLR method, DEL3 is also a pressure reduction indicator for detecting a reduction in pressure in a tire and wheel assembly.
Expression 2

$$DEL3 = \left(\frac{V_{FL} + V_{RL}}{V_{FR} + V_{RR}} - 1\right) * 100 \tag{2}$$

At step S5, the identification unit 23 identifies torsional resonance frequencies of the tires attached to the front axle based on the rotational speed signals representing the rotational speeds $V_{FL}$ and $V_{FR}$. Specifically, the identification unit 23 identifies a first torsional resonance frequency $\omega_{FL}$ of the tire included in the tire and wheel assembly T1 attached at the front left position FL based on the rotational speed signal representing the rotational speed V1. In addition, the identification unit 23 identifies a second torsional resonance frequency $\omega_{FR}$ of the tire included in the tire and wheel assembly T2 attached at the front right position FR based on the rotational speed signal representing the rotational speed V2.

Although a method of identifying the first torsional resonance frequency $\omega_{FL}$ is not particularly limited, it is possible to identify it as described below, for example. The identification unit 23 first assumes a transfer function G(s) that uses an input u from a road surface as an input and a rotational speed $\theta$ as an output. The identification unit 23 assigns white noise to the input u and assigns the rotational speed V1 to the rotational speed $\theta$, and successively performs updating to identify the transfer function G(s). Next, the identification unit 23 assigns s = j$\omega$ ($\omega$ = 2$\pi$f) to the transfer function G(s) to convert the transfer function G(s) into a function G(f) for a frequency region. The identification unit 23 further calculates a power spectrum of G(f) to identify f at which the power spectrum of G(f) reaches a maximum as the first torsional resonance frequency $\omega_{FL}$. The identification unit 23 can apply a similar procedure to the second torsional resonance frequency $\omega_{FR}$.

After it is determined to be "YES" at step S1, the next steps S2 to S5 may be continuously repeated a plurality of times. That is, the acquisition unit 20 may acquire, in chronological order, a plurality of data sets of the rotational speeds V1 to V4 at the identical time. The first calculation unit 21 may calculate a plurality of the first indicators DEL1 in chronological order based on the time-series data set of the rotational speeds V1 to V4, and the second calculation unit 22 may calculate a plurality of the second indicators DEL3 in chronological order based on the time-series data set of the rotational speeds V1 to V4. The identification unit 23 may identify a plurality of the first torsional resonance frequencies $\omega_{FL}$ and the second torsional resonance frequencies $\omega_{FR}$ in chronological order based on the time-series data set of the rotational speeds V1 to V4.

At step S6, the rotation determination unit 24 determines whether or not respective initial values DEL1_0, DEL3_0, $\omega_{FL\_0}$, and $\omega_{FR\_0}$ of the first indicator DEL1, the second indicator DEL3, the first torsional resonance frequency $\omega_{FL}$, and the second torsional resonance frequency $\omega_{FR}$ have already been stored in the storage device 15. The initial values DEL1_0, DEL3_0, $\omega_{FL\_0}$, and $\omega_{FR\_0}$ is respective values (including average values) of the first indicator DEL1, the second indicator DEL3, the first torsional resonance frequency $\omega_{FL}$, and the second torsional resonance frequency $\omega_{FR}$ that have been acquired under the condition that the tire and wheel assemblies T1 to T4 are all assumed to be within a normal internal pressure range. These initial values are necessary for performing a later determination of the rotation of the attachment positions of the tires. When the rotation determination unit 24 determines that the initial values DEL1_0, DEL3_0, $\omega_{FL\_0}$, and $\omega_{FR\_0}$ have already been stored in the storage device 15 (YES), step S8 is then executed. When the rotation determination unit 24 determines that the initial values DEL1_0, DEL3_0, $\omega_{FL\_0}$, and $\omega_{FR\_0}$ have not been stored in the storage device 15 yet (NO), step S7 is then executed.

At step S7, the rotation determination unit 24 stores values of the first indicator DEL1, the second indicator DEL3, the first torsional resonance frequency $\omega_{FL}$, and the second torsional resonance frequency $\omega_{FR}$ that have been acquired at steps S3 to S5 as the initial values DEL1_0, DEL3_0, $\omega_{FL\_0}$, and $\omega_{FR\_0}$ in the storage device 15 respectively. For these initial values, for example, average values of time-series data may be adopted. After step S7, step S1 is executed again.

At step S8, the rotation determination unit 24 determines whether or not a reduction in pressure has occurred in at least one of the tire and wheel assemblies T1 to T4 based on at least one of the first indicator DEL1, the second indicator DEL3, the first torsional resonance frequency $\omega_{FL}$, and the second torsional resonance frequency $\omega_{FR}$ that have been acquired at steps S3 to S5. This determination is performed, for example, by comparing |DEL1 - DEL1_0|, |DEL3 - DEL3_0|, $|\omega_{FL} - \omega_{FL\_0}|$, and $|\omega_{FR} - \omega_{FR\_0}|$ with respective predetermined pressure reduction threshold values. The pressure reduction threshold values are, for example, defined beforehand based on values of DEL1, DEL3, $\omega_{FL}$, and $\omega_{FR}$ when pressure has reduced by 15% to 20% from normal internal pressure in any one of the tire and wheel assemblies T1 to T4, and stored in the storage device 15. When the rotation determination unit 24 determines that a reduction in pressure has occurred in at least one of the tire and wheel assemblies T1 to T4 (YES), it is necessary, in the TPMS, to perform processing that is higher in a degree of priority such as identification of a tire and wheel assembly in which a reduction in pressure has occurred and issuance of a warning to the user. Therefore, the tire position rotation detection processing ends. When the rotation determination unit 24 determines that no reduction in pressure (at a warning level) has occurred in any of the tire and wheel assemblies T1 to T4 (NO), step S9 is then executed.

At step S9, the rotation determination unit 24 performs a determination based on the first indicator DEL1 and the second indicator DEL3. Specifically, the rotation determination unit 24 compares |DEL1 - DEL1_0| = $\Delta$DEL1 representing an absolute value of a difference between the first indicator DEL1 calculated at step S3 and the initial value DEL1_0 with a predetermined first threshold value Th1. Similarly, the rotation determination unit 24 compares |DEL3 - DEL3_0| = $\Delta$DEL3 representing an absolute value of a difference between the second indicator DEL3 calculated at step S4 and the initial value DEL3_0 with a predetermined second threshold value Th2. Unlike the pressure reduction threshold values described above, the first threshold value Th1 and the second threshold value Th2 is each a value that is approximately 1/3 of each of the pressure reduction threshold values described above. Therefore, even when $\Delta$DEL1 exceeds the first

threshold value Th1 or ΔDEL3 exceeds the second threshold value Th2, it is not immediately determined that a reduction in pressure at a warning level has occurred. The first threshold value Th1 and the second threshold value Th2 may be values identical to each other or values different from each other. When the rotation determination unit 24 determines that ΔDEL1 exceeds the first threshold value Th1 (ΔDEL1 > Th1) and ΔDEL3 is equal to or below the second threshold value Th2 (ΔDEL3 ≤ Th2) (YES), step S10 is then executed. Otherwise, when the rotation determination unit 24 determines that ΔDEL1 is equal to or below the first threshold value Th1 (ΔDEL1 ≤ Th1) and ΔDEL3 exceeds the second threshold value Th2 (ΔDEL3 > Th2) (YES), step S10 is then executed. When the rotation determination unit 24 determines that ΔDEL1 and ΔDEL3 do not satisfy the conditions described above (NO), step S1 is then executed. That is, in a case of ΔDEL1 ≤ Th1 and ΔDEL3 ≤ Th2, or in a case of ΔDEL1 > Th1 and ΔDEL3 > Th2, it is determined that the rotation of the attachment positions of the tire and wheel assemblies T1 to T4 has not been performed when the vehicle 1 has stopped immediately before the vehicle 1 starts present traveling.

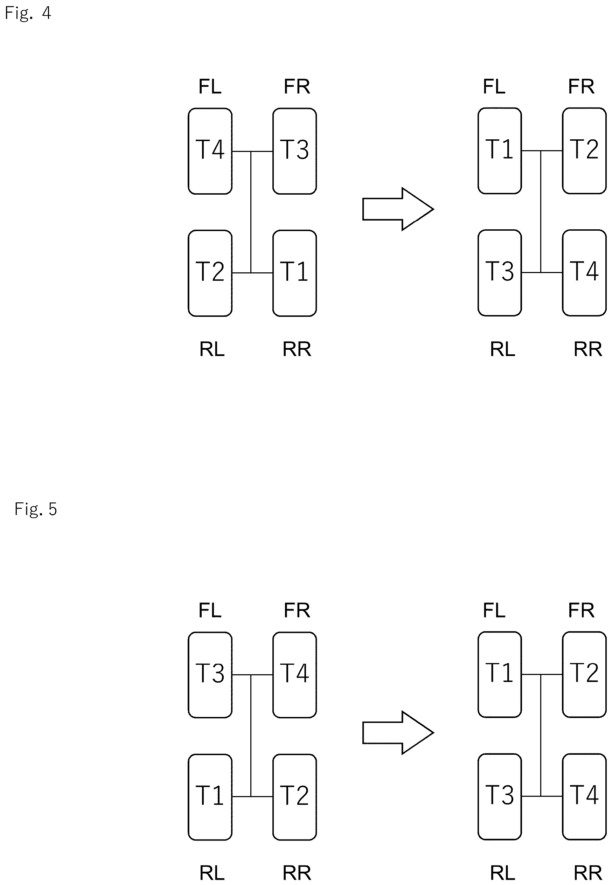

This determination is based on a principle as described below. It is assumed that, immediately before the vehicle 1 starts present traveling, the rotation of the attachment positions of the tire and wheel assemblies T1 to T4 has been performed and the tire and wheel assemblies T1 to T4 originally attached as illustrated on the left side in FIG. 4 are attached as illustrated in FIG. 1 (on the right side in FIG. 4) at present. That is, it is assumed that the rotation of the tire and wheel assemblies T4 and T1 has been performed between the front left position FL and the rear right position RR and the rotation of the tire and wheel assemblies T3 and T2 has been performed between the front right position FR and the rear left position RL. Note that it is assumed that, at points in time before and after the rotation, the tire and wheel assemblies T1 to T4 are all at the normal internal pressure. In this case, during traveling before the rotation, V4, V3, V2, and V1 are respectively assigned to $V_{FL}$, $V_{FR}$, $V_{RL}$, and $V_{RR}$ in Expression (1) and Expression (2), and, during traveling after the rotation, V1, V2, V3, and V4 are respectively assigned to $V_{FL}$, $V_{FR}$, $V_{RL}$, and $V_{RR}$ in Expression (1) and Expression (2). As a result, before and after the rotation, a value of DEL1 does not theoretically change, while the sign of a value of DEL3 theoretically inverts. Therefore, defining threshold values of values that can be considered to have not changed from the respective initial values as the first threshold value Th1 and the second threshold value Th2 beforehand and storing them in the storage device 15 make it possible to determine whether or not the rotation of the attachment positions as illustrated in FIG. 4 has been performed based on ΔDEL1 and ΔDEL3.

In addition, it is assumed that, immediately before the vehicle 1 starts present traveling, the rotation of the attachment positions of the tire and wheel assemblies T1 to T4 has been performed and the tire and wheel assemblies T1 to T4 originally attached as illustrated on the left side in FIG. 5 are attached as illustrated in FIG. 1 (on the right side in FIG. 5) at present. That is, it is assumed that the rotation of the tire and wheel assemblies T3 and T1 has been performed between the front left position FL and the rear left position RL and the rotation of the tire and wheel assemblies T4 and T2 has been performed between the front right position FR and the rear right position RR. Note that it is assumed that, at points in time before and after the rotation, the tire and wheel assemblies T1 to T4 are all at the normal internal pressure. In this case, during traveling before the rotation, V3, V4, V1, and V2 are respectively assigned to $V_{FL}$, $V_{FR}$, $V_{RL}$, and $V_{RR}$ in Expression (1) and Expression (2), and, during traveling after the rotation, V1, V2, V3, and V4 are respectively assigned to $V_{FL}$, $V_{FR}$, $V_{RL}$, $V_{RR}$ in Expression (1) and Expression (2). As a result, before and after the rotation, the value of DEL3 does not theoretically change, while the sign of the value of DEL1 theoretically inverts. Therefore, it is possible to determine whether or not the rotation of the attachment positions as illustrated in FIG. 5 has been performed based on the first threshold value Th1 and the second threshold value Th2, and ΔDEL1 and ΔDEL3 described above.

To summarize those described above, when ΔDEL1 > Th1 and ΔDEL3 ≤ Th2 are satisfied, it is possible to determine that the rotation of the tire and wheel assemblies has been performed between the front left position FL and the rear left position RL and the rotation of the tire and wheel assemblies has been performed between the front right position FR and the rear right position RR. In addition, when ΔDEL1 ≤ Th1 and ΔDEL3 > Th2 are satisfied, it is possible to determine that the rotation of the tire and wheel assemblies has been performed between the front left position FL and the rear right position RR and the rotation of the tire and wheel assemblies has been performed between the front right position FR and the rear left position RL. However, even when, in the tire and wheel assemblies T1 and T4, pressure has been reduced to a similar degree, or even when, in the tire and wheel assemblies T2 and T3, pressure has been reduced to a similar degree, although the rotation of the attachment positions has not been performed, ΔDEL1 > Th1 and ΔDEL3 ≤ Th2 may be satisfied. Similarly, even when, in the tire and wheel assemblies T1 and T3, pressure has been reduced to a similar degree, or even when, in the tire and wheel assemblies T2 and T4, pressure has been reduced to a similar degree, ΔDEL1 ≤ Th1 and ΔDEL3 > Th2 may be satisfied. Then, to differentiate a reduction in pressure in two tires from the rotation of the attachment positions, step S10 is executed.

Referring to FIG. 3A, at step S10, the rotation determination unit 24 performs a determination based on the first torsional resonance frequency $\omega_{FL}$ and the second torsional resonance frequency $\omega_{FR}$. Specifically, the rotation determination unit 24 compares $|\omega_{FL} - \omega_{FL\_0}| = \Delta\omega_{FL}$ representing an absolute value of a difference between the first torsional resonance frequency $\omega_{FL}$ identified at step S5 and the initial value $\omega_{FL\_0}$ with a predetermined third threshold value Th3. The third threshold value Th3 is, for example, defined beforehand based on a value of $\Delta\omega_{FL}$ in a case where pressure has reduced by 5% to 15% from the normal internal pressure when one of the tire and wheel assemblies T1 to T4 is attached at the front left position FL, and stored in the storage device 15. In addition, the rotation determination unit 24 compares $|\omega_{FR} - \omega_{FR\_0}| = \Delta\omega_{FR}$ representing an absolute value of a difference between the second torsional resonance frequency $\omega_{FR}$ identified at step S5 and the initial value $\omega_{FR\_0}$ with a predetermined fourth threshold value Th4. The fourth threshold value Th4 is defined beforehand as with the third threshold value, and is stored in the storage device 15. When the rotation of the attachment positions has been performed under a situation in which all the tire and wheel assemblies T1 to T4 are within the normal internal pressure range, the first torsional resonance frequency $\omega_{FL}$ and the second torsional resonance frequency $\omega_{FR}$ do not theoretically change from the initial values. Therefore, when a change in the first torsional resonance frequency $\omega_{FL}$ from the initial value $\omega_{FL\_0}$ is equal to or below the third threshold value Th3 ($\Delta\omega_{FL} \leq$ Th3) and a change in the second torsional resonance frequency $\omega_{FR}$ from the initial value $\omega_{FL\_0}$ is equal to or below the fourth threshold value Th4 ($\Delta\omega_{FR} \leq$ Th4), the rotation determination unit 24 determines that the rotation of the attachment positions has been performed (YES), and, in a case other than $\Delta\omega_{FL} \leq$ Th3 and $\Delta\omega_{FR} \leq$ Th4, the rotation determination unit 24 determines that the rotation of the attachment positions has not been performed (NO).

At step S10, when the rotation determination unit 24 determines that the rotation of the attachment positions has not been performed (NO), the tire position rotation detection processing ends. At step S10, when the rotation determination unit 24 determines that the rotation of the attachment positions has been performed (YES), step S11 illustrated in FIG. 3B is executed.

At step S11, the notification unit 25 issues a notification urging the user to perform an initialization operation. Specifically, the notification unit 25 creates message data such as "Please perform an initialization operation when you have performed tire rotation" and causes the display 3 to output it. However, an aspect of the notification is not limited to a character message, and may be, for example, a graphic indicating an initialization operation, or voice data or buzzer sound of the message described above, and the notification may be outputted from a speaker installed in the vehicle, in addition to or instead of the display 3. Moreover, in addition to or instead of those described above, the notification unit 25 may allow the operation unit 4 to come on.

At step S12, the initialization unit 26 determines whether or not the user has performed an initialization operation, that is, whether or not an initialization instruction has been received via the operation unit 4. When the initialization unit 26 determines that an initialization operation has been performed (YES), step S13 is then executed. On the other hand, when the initialization unit 26 determines that no initialization operation has been performed (NO), step S11 is executed again. That is, in the detection device 2, it is possible for the notification unit 25 to continuously or intermittently issue a notification urging an initialization operation until the initialization operation is performed.

At step S13, the initialization unit 26 transmits an initialization signal to the in-vehicle ECU that constitutes the TPMS and that performs the reduced pressure detection processing on the tire and wheel assemblies T1 to T4. The initialization signal is a signal that requests resetting of the reference values for the pressure reduction indicators DEL1 and DEL3 and a pressure reduction indicator DEL2 stored in a storage region of the in-vehicle ECU at present, acquiring of new reference values, and updating of the old reference values. In the present embodiment, the reference values for DEL1 and DEL3 are respectively identical to the initial values DEL1_0 and DEL3_0. Note that, in the present embodiment, the pressure reduction indicator DEL2 is defined as Expression (3) described below, and, when the tire and wheel assemblies T1 to T4 are attached as illustrated in FIG. 1, V1, V2, V3, and V4 at the identical time are respectively assigned to $V_{FL}$, $V_{FR}$, $V_{RL}$, and $V_{RR}$ in Expression (3).
Expression 3

$$DEL2 = \left(\frac{V_{FL} + V_{FR}}{V_{RL} + V_{RR}} - 1\right) * 100 \tag{3}$$

In the in-vehicle ECU having received the initialization signal, the values of the pressure reduction indicators DEL1 to DEL3 stored as the present reference values are reset, and the newly calculated values (including average values) of the pressure reduction indicators DEL1 to DEL3 are overwritten and stored as reference values in the storage region. Thereby, it is possible to more accurately perform the reduced pressure detection processing based on the latest pressure reduction indicators DEL1 to DEL3 and the reference values for the pressure reduction indicators DEL1 to DEL3 after the rotation of the tire and wheel assemblies T1 to T4 has been performed.

In addition, the initialization unit 26 resets the values of DEL1_0, DEL3_0, $\omega_{FL\_0}$, and $\omega_{FR\_0}$ as the initial values stored in the storage device 15 at step S7. After that, when steps S1 to S5 are executed again, the rotation determination unit 24 determines in a determination at step S6 that no initial values DEL1_0, DEL3_0, $\omega_{FL\_0}$, and $\omega_{F\_0}$ have yet been stored in the storage device 15 (NO). Then, the rotation determination unit 24 overwrites and stores, in the storage device 15, as initial values, the first indicator DEL1 and the second indicator DEL3 calculated at steps S3 and S4 and the first torsional resonance frequency $\omega_{FL}$ and the second torsional resonance frequency $\omega_{FR}$ identified at step S5.

<4. Features>

(1) With the detection device 2 according to the embodiment described above, it is possible to issue, even when the user has forgotten to perform an initialization operation on the TPMS after performing the rotation of the attachment positions of the tire and wheel assemblies T1 to T4, a notification to that effect. Therefore, it is possible to execute a detection of a reduction in pressure in the tire and wheel assemblies T1 to T4 while avoiding a deterioration of detection accuracy due to the rotation.

(2) With the detection device 2 according to the embodiment described above, it is possible to differentiate whether a change in the first indicator DEL1 or the second indicator DEL3 is due to the rotation of the attachment positions of the tire and wheel assemblies T1 to T4 or due to a reduction in pressure in certain two tires among the tire and wheel assemblies T1 to T4. Therefore, it is possible to reduce a possibility that, even when the user has not performed the rotation, a notification urging an initialization operation is erroneously issued.

(3) With the detection device 2 according to the embodiment described above, it is possible to differentiate two types of rotation of the attachment positions of the tire and wheel assemblies T1 to T4, illustrated in FIGS. 4 and 5.

<5. Modifications>

Although the embodiment of the present invention has been described above, the present invention is not limited to the embodiment described above, and may be variously modified without departing from its gist. For example, possible modifications are described below. In addition, it is possible to appropriately combine points of the modifications described below.

(1) In the embodiment described above, the detection device 2 has set a first indicator as DEL1 and a second indicator as DEL3, and has determined whether or not $\Delta DEL1 > Th1$ and $\Delta DEL3 \leq Th2$, or $\Delta DEL1 \leq Th1$ and $\Delta DEL3 > Th2$ are satisfied. However, the detection device 2 may only determine whether or not any one of the conditions is satisfied. For example, when the type of the tire and wheel assemblies T1 to T4 attached to the vehicle 1 has been determined and, for designing the tire and wheel assemblies T1 to T4, the rotation as illustrated in FIG. 5 has been designated, the detection device 2 may only determine whether or not $\Delta DEL1 \leq Th1$ and $\Delta DEL3 > Th2$ are satisfied. In this case, it is possible to assign DEL3 to the first indicator according to the present invention, assign DEL1 to the second indicator according to the present invention, assign the threshold value Th1 to the second threshold value according to the present invention, and assign the threshold value Th2 to the first threshold value according to the present invention.

(2) DEL1 as the first indicator or DEL3 as the first indicator is not limited to that according to the embodiment described above, and, for example, it is possible to use DEL2 in Expression (3) described above as the first indicator. For DEL2, even when the rotation as illustrated in FIG. 4 has been performed, or even when the rotation as illustrated in FIG. 5 has been performed, its sign theoretically inverts. Therefore, combining DEL2 and an indicator that is assumed to not change theoretically due to the rotation of the attachment positions makes it possible to detect the rotation of the attachment positions. However, from the viewpoint of improving detection accuracy, DEL1 or DEL3 whose variation is smaller is preferable as an indicator.

(3) The first indicator (or the second indicator) for comparing the rotational speed of the tire attached at the front left position FL and the rotational speed of the tire attached at the rear right position RR with the rotational speed of the tire attached at the front right position FR and the rotational speed of the tire attached at the rear left position RL is not limited to one defined in Expression (1), and it is possible to use, for example, DEL1 acquired when Expression (1) is appropriately modified as described below or DEL1 defined in Expression (4).

$$DEL1 = (V_{FL} + V_{RR}) / (V_{FR} + V_{RL})$$

$$DEL1 = \{(V_{FL} + V_{RR}) - (V_{FR} + V_{RL})\} \quad (4)$$

(4) The first indicator for comparing the rotational speed of the tire attached at the front left position FL and the rotational speed of the tire attached at the front right position FR with the rotational speed of the tire attached at the rear left position RL and the rotational speed of the tire attached at the rear right position RR is not limited to DEL2 in Expression (3), and it is possible to use, for example, DEL2 acquired when Expression (3) is appropriately modified as described below or DEL2 defined in Expression (5).

$$DEL2 = (V_{FL} + V_{FR}) / (V_{RL} + V_{RR})$$

$$DEL2 = \{(V_{FL} + V_{FR}) - (V_{RL} + V_{RR})\} \qquad (5)$$

(5) The first indicator (or the second indicator) for comparing the rotational speed of the tire attached at the front left position FL and the rotational speed of the tire attached at the rear left position RL with the rotational speed of the tire attached at the front right position FR and the rotational speed of the tire attached at the rear right position RR is not limited to one defined in Expression (2), and it is possible to use, for example, DEL3 acquired when Expression (2) is appropriately modified as described below or DEL3 defined in Expression (6).

$$DEL3 = (V_{FL} + V_{RL}) / (V_{FR} + V_{RR})$$

$$DEL3 = \{(V_{FL} + V_{RL}) - (V_{FR} + V_{RR})\} \qquad (6)$$

(6) In the embodiment described above, as the first torsional resonance frequency and the second torsional resonance frequency, the respective torsional resonance frequencies of the tires included in the tire and wheel assemblies attached to the front axle have been identified. However, as the first torsional resonance frequency and the second torsional resonance frequency, the respective torsional resonance frequencies of the tires included in the tire and wheel assemblies attached to the rear axle may be identified. From the viewpoint of identification accuracy of a torsional resonance frequency, the torsional resonance frequencies of the tires included in the tire and wheel assemblies attached to an axle to which a larger load is applied in the vehicle 1 is preferably identified.

(7) In the embodiment described above, to differentiate the rotation of the attachment positions from a reduction in pressure in two tires, the rotation determination unit 24 has compared $\Delta\omega_{FL}$ with the third threshold value Th3 and has compared $\Delta\omega_{FR}$ with the fourth threshold value Th4 at step S10. In addition to or instead of this, the rotation determination unit 24 may compare an absolute value of a difference between the first torsional resonance frequency $\omega_{FL}$ and the second torsional resonance frequency $\omega_{FR}$ with a predetermined threshold value. When the absolute value is equal to or below the predetermined threshold value, the rotation determination unit 24 may determine that the rotation of the attachment positions has been performed (YES).

(8) Steps S5 and S10 may be omitted. That is, the identification unit 23 may be omitted.

(9) The steps in the tire position rotation detection processing according to the embodiment described above may be executed by a plurality of computers. That is, at least some of steps S1 to S13 may be executed by another external computer connected to the detection device 2, for example. In addition, the order of executing steps S3 to S5 may be changed. Furthermore, step S12 may be executed before step S11, and, when it is determined that an initialization operation has already been received, the notification unit 25 does not need to issue a notification.

LIST OF REFERENCE NUMERALS

1 Vehicle

2 Detection device

15 Storage device

20 Acquisition unit

21 First calculation unit

22 Second calculation unit

23 Identification unit

24 Rotation determination unit

25 Notification unit

26 Initialization unit

**Claims**

1. A tire position rotation detection device (2) comprising:

an acquisition unit (20) that is configured to acquire, while a vehicle (1) having at least a front left position, a front right position, a rear left position, and a rear right position for attaching tires (T1, T2, T3, T4) is traveling, a rotational speed ($V_{FL}$, $V_{FR}$, $V_{RL}$, $V_{RR}$) of each of the tires (T1, T2, T3, T4) respectively attached at the front left position, the front right position, the rear left position, and the rear right position;
a first calculation unit (21) that is configured to calculate a first indicator (DEL1) for comparing the rotational speed ($V_{FL}$) of the tire attached at the front left position and the rotational speed ($V_{RR}$) of the tire attached at the rear right position with the rotational speed ($V_{FR}$) of the tire attached at the front right position and the rotational speed ($V_{RL}$) of the tire attached at the rear left position or a first indicator (DEL2) for comparing the rotational speed ($V_{FL}$) of the tire attached at the front left position and the rotational speed ($V_{FR}$) of the tire attached at the front right position with the rotational speed ($V_{RL}$) of the tire attached at the rear left position and the rotational speed ($V_{RR}$) of the tire attached at the rear right position;
a second calculation unit (22) that is configured to calculate a second indicator (DEL3) for comparing the rotational speed ($V_{FL}$) of the tire attached at the front left position and the rotational speed ($V_{RL}$) of the tire attached at the rear left position with the rotational speed ($V_{FR}$) of the tire attached at the front right position and the rotational speed ($V_{RR}$) of the tire attached at the rear right position; and
a rotation determination unit (24) that is configured to determine whether or not rotation of attachment positions of the tires (T1, T2, T3, T4) has been performed before the vehicle (1) starts traveling based on the first indicator (DEL1, DEL2) and the second indicator (DEL3),
wherein the rotation determination unit (24) determines that, when a change in the first indicator (DEL1, DEL2) from an initial value (DEL1_0, DEL2_0) exceeds a predetermined first threshold value (Th1) and a change in the second indicator (DEL3) from an initial value (DEL3_0) is equal to or below a predetermined second threshold value (Th2), the rotation of the tires (T1, T2, T3, T4) has been performed between the front left position and the rear left position before the vehicle (1) starts traveling and the rotation of the tires (T1, T2, T3, T4) has been performed between the front right position and the rear right position before the vehicle (1) starts traveling.

2. A tire position rotation detection device (2) comprising:

an acquisition unit (20) that is configured to acquire, while a vehicle (1) having at least a front left position, a front right position, a rear left position, and a rear right position for attaching tires (T1, T2, T3, T4) is traveling, a rotational speed ($V_{FL}$, $V_{FR}$, $V_{RL}$, $V_{RR}$) of each of the tires (T1, T2, T3, T4) respectively attached at the front left position, the front right position, the rear left position, and the rear right position;
a first calculation unit (21) that is configured to calculate a first indicator (DEL3) for comparing the rotational speed ($V_{FL}$) of the tire attached at the front left position and the rotational speed ($V_{RL}$) of the tire attached at the rear left position with the rotational speed ($V_{FR}$) of the tire attached at the front right position and the rotational speed ($V_{RR}$) of the tire attached at the rear right position or a first indicator (DEL2) for comparing the rotational speed ($V_{FL}$) of the tire attached at the front left position and the rotational speed ($V_{FR}$) of the tire attached at the front right position with the rotational speed ($V_{RL}$) of the tire attached at the rear left position and the rotational speed ($V_{RR}$) of the tire attached at the rear right position;
a second calculation unit (22) that is configured to calculate a second indicator (DEL1) for comparing the rotational speed ($V_{FL}$) of the tire attached at the front left position and the rotational speed ($V_{RR}$) of the tire attached at the rear right position with the rotational speed ($V_{FR}$) of the tire attached at the front right position and the rotational speed ($V_{RL}$) of the tire attached at the rear left position; and
a rotation determination unit (24) that is configured to determine whether or not rotation of attachment positions of the tires (T1, T2, T3, T4) has been performed before the vehicle (1) starts traveling based on the first indicator (DEL3, DEL2) and the second indicator (DEL1),
wherein the rotation determination unit (24) determines that, when a change in the first indicator (DEL3, DEL2) from an initial value (DEL3_0, DEL2_0) exceeds a predetermined first threshold value (Th1) and a change in the second indicator (DEL1) from an initial value (DEL1_0) is equal to or below a predetermined second threshold value (Th2), the rotation of the tires (T1, T2, T3, T4) has been performed between the front left position and the rear right position before the vehicle (1) starts traveling and the rotation of the tires (T1, T2, T3, T4) has been performed between the front right position and the rear left position before the vehicle (1) starts traveling.

3. The tire position rotation detection device (2) according to claim 1 or 2, further comprising

an identification unit (23) that is configured to identify, based on a rotational speed signal representing the rotational speed ($V_{FL}$, $V_{FR}$, $V_{RL}$, $V_{RR}$) of each of the tires (T1, T2, T3, T4), a first torsional resonance frequency ($\omega_{FL}$) of the tire attached at the front left position and a second torsional resonance frequency ($\omega_{FR}$) of the tire attached at the front right position or identify, based on the rotational speed signal representing the rotational speed ($V_{FL}$, $V_{FR}$, $V_{RL}$, $V_{RR}$) of each of the tires(T1, T2, T3, T4), a first torsional resonance frequency ($\omega_{FL}$)of the tire attached at the rear left position and a second torsional resonance frequency ($\omega_{RR}$) of the tire attached at the rear right position,

wherein the rotation determination unit (24) determines that, when the change in the first indicator (DEL1, DEL3, DEL2) from the initial value (DEL1_0, DEL3_0, DEL2_0) exceeds the predetermined first threshold value (Th1), the change in the second indicator (DEL3, DEL1) from the initial value (DEL3_0, DEL1_0) is equal to or below the predetermined second threshold value (Th2), a change in the first torsional resonance frequency ($\omega_{FL}$, ($\omega_{RL}$) from an initial value ($\omega_{FL\_0}$, $\omega_{RL\_0}$) is equal to or below a predetermined third threshold value (Th3), and a change in the second torsional resonance frequency ($\omega_{FR}$, $\omega_{RR}$) from an initial value ($\omega_{FR\_0}$, $\omega_{RR\_0}$) is equal to or below a predetermined fourth threshold value (Th4), the rotation of the tires (T1, T2, T3, T4) has been performed before the vehicle (1) starts traveling.

4. The tire position rotation detection device according to claim 1 or 2, further comprising a notification unit (25) that is configured to issue, when it is determined that the rotation of the tires (T1, T2, T3, T4) has been performed before the vehicle (1) starts traveling, a notification urging a user of the vehicle (1) to perform an initialization operation.

5. A tire position rotation detection method executed by one or more computers, the tire position rotation detection method comprising:

acquiring, while a vehicle (1) having at least a front left position, a front right position, a rear left position, and a rear right position for attaching tires (T1, T2, T3, T4) is traveling, a rotational speed ($V_{FL}$, $V_{FR}$, $V_{RL}$, $V_{RR}$) of each of the tires (T1, T2, T3, T4) respectively attached at the front left position, the front right position, the rear left position, and the rear right position;

calculating a first indicator (DEL1) for comparing the rotational speed ($V_{FL}$) of the tire attached at the front left position and the rotational speed ($V_{RR}$) of the tire attached at the rear right position with the rotational speed ($V_{FR}$) of the tire attached at the front right position and the rotational speed ($V_{RL}$) of the tire attached at the rear left position or a first indicator (DEL2) for comparing the rotational speed ($V_{FL}$) of the tire attached at the front left position and the rotational speed ($V_{FR}$) of the tire attached at the front right position with the rotational speed ($V_{RL}$) of the tire attached at the rear left position and the rotational speed ($V_{RR}$) of the tire attached at the rear right position;

calculating a second indicator (DEL3) for comparing the rotational speed ($V_{FL}$) of the tire attached at the front left position and the rotational speed ($V_{RL}$) of the tire attached at the rear left position with the rotational speed ($V_{FR}$) of the tire attached at the front right position and the rotational speed ($V_{RR}$) of the tire attached at the rear right position; and

determining whether or not rotation of attachment positions of the tires (T1, T2, T3, T4) has been performed before the vehicle (1) starts traveling based on the first indicator (DEL1, DEL2) and the second indicator (DEL3),

wherein the determining is determining that, when a change in the first indicator (DEL1, DEL2) from an initial value (DEL1_0, DEL2_0) exceeds a predetermined first threshold value (Th1) and a change in the second indicator (DEL3) from an initial value (DEL3_0) is equal to or below a predetermined second threshold value (Th2), the rotation of the tires (T1, T2, T3, T4) has been performed between the front left position and the rear left position before the vehicle (1) starts traveling and the rotation of the tires (T1, T2, T3, T4) has been performed between the front right position and the rear right position before the vehicle (1) starts traveling.

6. A tire position rotation detection method executed by one or more computers, the tire position rotation detection method comprising:

acquiring, while a vehicle (1) having at least a front left position, a front right position, a rear left position, and a rear right position for attaching tires (T1, T2, T3, T4) is traveling, a rotational speed ($V_{FL}$, $V_{FR}$, $V_{RL}$, $V_{RR}$) of each of the tires (T1, T2, T3, T4) respectively attached at the front left position, the front right position, the rear left position, and the rear right position;

calculating a first indicator (DEL3) for comparing the rotational speed ($V_{FL}$) of the tire attached at the front left position and the rotational speed ($V_{RL}$) of the tire attached at the rear left position with the rotational speed ($V_{FR}$) of the tire attached at the front right position and the rotational speed ($V_{RR}$) of the tire attached at the rear right position or a first indicator (DEL2) for comparing the rotational speed ($V_{FL}$) of the tire attached at the front left position and the rotational speed ($V_{FR}$) of the tire attached at the front right position with the rotational speed ($V_{RL}$) of the tire attached at the rear left position and the rotational speed ($V_{RR}$) of the tire attached at the rear right position;

calculating a second indicator (DEL1) for comparing the rotational speed ($V_{FL}$) of the tire attached at the front left position and the rotational speed ($V_{RR}$) of the tire attached at the rear right position with the rotational speed ($V_{FR}$) of the tire attached at the front right position and the rotational speed ($V_{RL}$) of the tire attached at the rear left position; and

determining whether or not rotation of attachment positions of the tires (T1, T2, T3, T4) has been performed before the vehicle (1) starts traveling based on the first indicator (DEL3, DEL2) and the second indicator (DEL1), wherein the determining is determining that, when a change in the first indicator (DEL3, DEL2) from an initial value (DEL3_0, DEL2_0) exceeds a predetermined first threshold value (Th1) and a change in the second indicator (DEL1) from an initial value (DEL1_0) is equal to or below a predetermined second threshold value (Th2), the rotation of the tires (T1, T2, T3, T4) has been performed between the front left position and the rear right position before the vehicle (1) starts traveling and the rotation of the tires (T1, T2, T3, T4) has been performed between the front right position and the rear left position before the vehicle (1) starts traveling.

7. A tire position rotation detection program causing one or more computers to execute:

acquiring, while a vehicle (1) having at least a front left position, a front right position, a rear left position, and a rear right position for attaching tires (T1, T2, T3, T4) is traveling, a rotational speed ($V_{FL}$, $V_{FR}$, $V_{RL}$, $V_{RR}$) of each of the tires (T1, T2, T3, T4) respectively attached at the front left position, the front right position, the rear left position, and the rear right position;

calculating a first indicator (DEL1) for comparing the rotational speed ($V_{FL}$) of the tire attached at the front left position and the rotational speed ($V_{RR}$) of the tire attached at the rear right position with the rotational speed ($V_{FR}$) of the tire attached at the front right position and the rotational speed ($V_{RL}$) of the tire attached at the rear left position or a first indicator (DEL2) for comparing the rotational speed ($V_{FL}$) of the tire attached at the front left position and the rotational speed ($V_{FR}$) of the tire attached at the front right position with the rotational speed ($V_{RL}$) of the tire attached at the rear left position and the rotational speed ($V_{RR}$) of the tire attached at the rear right position;

calculating a second indicator (DEL3) for comparing the rotational speed ($V_{FL}$) of the tire attached at the front left position and the rotational speed ($V_{RL}$) of the tire attached at the rear left position with the rotational speed ($V_{FR}$) of the tire attached at the front right position and the rotational speed ($V_{RR}$) of the tire attached at the rear right position; and

determining whether or not rotation of attachment positions of the tires (T1, T2, T3, T4) has been performed before the vehicle (1) starts traveling based on the first indicator (DEL1, DEL2) and the second indicator (DEL3), wherein the determining is determining that, when a change in the first indicator (DEL1, DEL2) from an initial value (DEL1_0, DEL2_0) exceeds a predetermined first threshold value (Th1) and a change in the second indicator (DEL3) from an initial value (DEL3_0) is equal to or below a predetermined second threshold value (Th2), the rotation of the tires (T1, T2, T3, T4) has been performed between the front left position and the rear left position before the vehicle (1) starts traveling and the rotation of the tires (T1, T2, T3, T4) has been performed between the front right position and the rear right position before the vehicle (1) starts traveling.

8. A tire position rotation detection program causing one or more computers to execute:

acquiring, while a vehicle (1) having at least a front left position, a front right position, a rear left position, and a rear right position for attaching tires (T1, T2, T3, T4) is traveling, a rotational speed ($V_{FL}$, $V_{FR}$, $V_{RL}$, $V_{RR}$) of each of the tires (T1, T2, T3, T4) respectively attached at the front left position, the front right position, the rear left position, and the rear right position;

calculating a first indicator (DEL3) for comparing the rotational speed ($V_{FL}$) of the tire attached at the front left position and the rotational speed ($V_{RL}$) of the tire attached at the rear left position with the rotational speed ($V_{FR}$) of the tire attached at the front right position and the rotational speed ($V_{RR}$) of the tire attached at the rear right position or a first indicator (DEL2) for comparing the rotational speed ($V_{FL}$) of the tire attached at the front left position and the rotational speed ($V_{FR}$) of the tire attached at the front right position with the rotational speed ($V_{RL}$) of the tire attached at the rear left position and the rotational speed ($V_{RR}$) of the tire attached at the rear right position;

calculating a second indicator (DEL1) for comparing the rotational speed ($V_{FL}$) of the tire attached at the front left position and the rotational speed ($V_{RR}$) of the tire attached at the rear right position with the rotational speed ($V_{FR}$) of the tire attached at the front right position and the rotational speed ($V_{RL}$) of the tire attached at the rear left position; and

determining whether or not rotation of attachment positions of the tires (T1, T2, T3, T4) has been performed before the vehicle (1) starts traveling based on the first indicator (DEL3, DEL2) and the second indicator (DEL1), wherein the determining is determining that, when a change in the first indicator (DEL3, DEL2) from an initial value (DEL3_0, DEL2_0) exceeds a predetermined first threshold value (Th1) and a change in the second indicator (DEL1) from an initial value (DEL1_0) is equal to or below a predetermined second threshold value (Th2), the rotation of the tires (T1, T2, T3, T4) has been performed between the front left position and the rear right position before the vehicle (1) starts traveling and the rotation of the tires (T1, T2, T3, T4) has been performed between the front right position and the rear left position before the vehicle (1) starts traveling.

Fig. 1

Fig. 2

2

DETECTION DEVICE (IN-VEHICLE ECU)

12

11

I/O INTERFACE

3

CPU

20 ACQUISITION UNIT

21 FIRST CALCULATION UNIT

22 SECOND CALCULATION UNIT

23 IDENTIFICATION UNIT

24 ROTATION DETERMINATION UNIT

25 NOTIFICATION UNIT

26 INITIALIZATION UNIT

15 STORAGE DEVICE

14 RAM

13 ROM

9 PROGRAM

6

6

6

6

4

8

Fig. 3 A

```
                           ┌──────────┐
                           │  START   │
                           └──────────┘
                                │
                                ▼
                    ◇ S1
          HAS CERTAIN PERIOD OF
          TIME OR MORE ELAPSED          ── NO
          AFTER VEHICLE HAS
          STOPPED?
                YES
                 ▼
        ┌─────────────────────┐  S2
        │   ACQUIRE V1 TO V4   │
        └─────────────────────┘
                 ▼
        ┌─────────────────────┐  S3
        │   CALCULATE DEL1     │
        └─────────────────────┘
                 ▼
  ┌──────────┐   ┌─────────────────────┐  S4
  │  STORE   │   │   CALCULATE DEL3     │
  │ INITIAL  │   └─────────────────────┘
  │ VALUES   │            ▼
  │  S7      │   ┌─────────────────────┐  S5
  └──────────┘   │ CALCULATE ωFL AND ωFR│
                 └─────────────────────┘
                          ▼
              ◇ S6
    NO    HAVE INITIAL VALUES
          BEEN ALREADY STORED?
                   YES
                    ▼
              ◇ S8
  YES   HAS PRESSURE BEEN
        REDUCED?
                NO
                 ▼
              ◇ S9
        ΔDEL1 > Th1 AND ΔDEL3 ≤ Th2
                 OR                      NO
        ΔDEL1 ≤ Th1 AND ΔDEL3 > Th2?
                YES
                 ▼
              ◇ S10
  NO    ΔωFL ≤ Th3 AND
        ΔωFR ≤ Th4?
                YES
                 ○
```

STORE INITIAL VALUES (S7)

ACQUIRE V1 TO V4 (S2)

CALCULATE DEL1 (S3)

CALCULATE DEL3 (S4)

CALCULATE $\omega_{FL}$ AND $\omega_{FR}$ (S5)

S6: HAVE INITIAL VALUES BEEN ALREADY STORED?

S8: HAS PRESSURE BEEN REDUCED?

S9: $\Delta DEL1 > Th1$ AND $\Delta DEL3 \leq Th2$ OR $\Delta DEL1 \leq Th1$ AND $\Delta DEL3 > Th2$?

S10: $\Delta\omega_{FL} \leq Th3$ AND $\Delta\omega_{FR} \leq Th4$?

END

Fig. 3 B

Fig. 4

FL      FR

T4    T3

T2    T1

RL      RR

⇒

FL      FR

T1    T2

T3    T4

RL      RR

Fig. 5

FL      FR

T3    T4

T1    T2

RL      RR

⇒

FL      FR

T1    T2

T3    T4

RL      RR

Europäisches
Patentamt

European
Patent Office

Office européen
des brevets

**EUROPEAN SEARCH REPORT**

Application Number

EP 25 21 3862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 776 257 B1 (WABCO GMBH [DE]) 20 March 2019 (2019-03-20) * paragraph [0021] - paragraph [0044]; figures 1-3 * ----- | 1-8 | INV. B60C23/04 B60C23/06 |
| A | US 6 137 400 A (YANASE MINAO [JP] ET AL) 24 October 2000 (2000-10-24) * column 3 - column 7; figures 1-16 * ----- | 1-8 | |

TECHNICAL FIELDS
SEARCHED (IPC)

B60C

The present search report has been drawn up for all claims

| Place of search | Date of completion of the search | Examiner |
|---|---|---|
| Munich | 24 April 2026 | Billen, Karl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 3862

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2026

| Patent document cited in search report | | Publication date | Patent family member(s) | | Publication date |
|---|---|---|---|---|---|
| EP 2776257 | B1 | 20-03-2019 | CN | 103764416 A | 30-04-2014 |
| | | | DE | 102011118436 A1 | 16-05-2013 |
| | | | EP | 2776257 A1 | 17-09-2014 |
| | | | US | 2014297149 A1 | 02-10-2014 |
| | | | WO | 2013068059 A1 | 16-05-2013 |
| US 6137400 | A | 24-10-2000 | DE | 69833613 T2 | 12-10-2006 |
| | | | EP | 0897816 A2 | 24-02-1999 |
| | | | US | 6137400 A | 24-10-2000 |

EPO FORM P0459

For more details about this annex : see Official Journal of the European Patent Office, No. 12/82

# EP 4 755 663 A1

**REFERENCES CITED IN THE DESCRIPTION**

**Patent documents cited in the description**

- JP 2017149340 A